# EUROPÄISCHE PATENTSCHRIFT

(11) **EP 1 249 290 B1**
(45) Veröffentlichungstag und Bekanntmachung des Hinweises auf die Patenterteilung: **26.03.2008**
(21) Anmeldenummer: 02405234.2
(22) Anmeldetag: 26.03.2002
(51) Int. Cl.: B23B 49/00

(54) **Handwerkzeuggerät mit elektronischem Tiefenanschlag**
Hand tool with electronic stop
Outil à main avec arrèt électronique

(30) Priorität: 10.04.2001 DE 10117952
(43) Veröffentlichungstag der Anmeldung: 16.10.2002
(73) Patentinhaber: HILTI Aktiengesellschaft, 9494 Schaan (LI)
(72) Erfinder: Schaer, Roland, 9472 Grabs (CH); Würsch, Christoph, 9470 Werdenberg (CH)
(74) Vertreter: Wildi, Roland

(56) Entgegenhaltungen:
- EP-A- 0 591 096
- DE-A- 3 615 874
- US-A- 5 161 922

## Beschreibung

Die Erfindung bezeichnet ein zumindest teilweise drehendes Handwerkzeuggerät wie eine Bohrmaschine oder einen Bohrhammer mit einem elektronischen Tiefenanschlag.

Zur Erzeugung von Sacklöchern vorgegebener Tiefe eignet sich ein Tiefenanschlag, welcher nach Erreichung der Solltiefe an der Werkzeugspitze den weiteren Materialabtrag unterbindet. Insbesondere zum Setzen hochbelasteter Anker im Bauhauptgewerbe ist die Einhaltung einer bestimmten Sacklochtiefe wichtig, da beim Setzen von Hinterschnittankern die Sacklochtiefe auf den Anker abgestimmt ist.

Nach der DE3214182 ist ein stabförmiger Tiefenanschlag für Bohrhämmer bekannt, welcher durch den Kontakt mit dem Werkstück ein weiteres Eindringen des Werkzeugs verhindert. Nach der JP62188612 ist bei einem vorgegebenen Messwert der stabförmige Tiefenanschlag über eine Verriegelungstaste einfach arretierbar. Nach der DE3912991 unterbricht ein federnd vorgespannter, einstellbarer, stabförmiger Tiefenanschlag bei Erreichen des Sollwertes den Strompfad zum Antrieb. Derartige sperrige mechanische Tiefenanschläge sind oftmals für den Nutzer störend und daher im Bauhauptgewerbe unerwünscht.

Nach der DE2838968 ist ein elektronischer Tiefenanschlag messtechnisch mit US-, HF- oder Lichtsensorik bestückt, welche zur Berechnung der Tiefe den Abstand zwischen der Werkzeugoberfläche und dem im Handwerkzeuggerät angeordneten Sensor bestimmt. Ein Berechnungsmittel unterbricht nach Erreichen der Solltiefe den Strompfad des Antriebs.

Nach der DE2855217 erfolgt die Einstellung des Sollwertes für einen elektronischen Tiefenanschlag direkt über ein Potentiometer. Das Erreichen der Solltiefe des Sacklochs durch die Werkzeugspitze wird unter anderem durch eine optische oder akustische Anzeige signalisiert. Die direkte Einstellung eines Sollwertes ist bei einer flüchtigen Betätigung im Bauhauptgewerbe fehleranfällig.

Nach der EP0659525 weist ein Bohrhammer einen Mikroprozessor zur Drehmomentregelung und ein graphisches Display mit numerischer und symbolischer Anzeige sowie zwei grossflächige up-down Tasten zur Eingabe auf.

Die Aufgabe der Erfindung besteht bei einem Handwerkzeuggerät mit einem elektronischen Tiefenanschlag in einer einfachen Sollwerteingabe für die Sacklochtiefe.

Die Aufgabe wird im wesentlichen durch die Merkmale des unabhängigen Anspruchs gelöst. Vorteilhafte Weiterbildungen ergeben sich aus den Unteransprüchen.

Im wesentlichen weist ein Handwerkzeuggerät für ein zumindest teilweise drehend angetriebenes Bohrwerkzeug einen elektronischen Tiefenanschlag mit einem Sensor zur berührungslosen Entfernungsmessung und mit einer Recheneinheit zur Berechnung der Tiefe einer Bohrwerkzeugspitze zu einer Referenzfläche sowie zur Signalisierung eines einen Sollwert erreichenden Messwertes auf, wobei der Sollwert über ein einziges händisch betätigbares Übernahmebetätigungsmittel in einen Sollwertspeicher übernehmbar ist.

Durch die bei einfacher Betätigung des Übernahmebetätigungsmittels erfolgende Übernahme des Sollwertes ist eine sehr einfache und somit auch im Bauhauptgewerbe akzeptable Möglichkeit der Eingabe des Sollwertes realisierbar. Diese erfolgt vorteilhaft durch Übernahme des Messwertes bei einem Referenzsackloch als Sollwert für eine Folge weiterer Löcher oder durch eine direkte Berücksichtigung des im Sackloch aufzunehmenden Befestigungsmittels bei der Messung, indem bspw. der Messstrahl zur Längenmessung auf das, neben der Werkzeugspitze an der Referenzfläche aufgesetzte, Befestigungsmittel gerichtet wird.

Vorteilhaft ist das Übernahmebetätigungsmittel als federnd druckvorgespannter Übernahmetaster, weiter vorteilhaft in einer zur Betätigung mit Schutzhandschuhen ausgebildeten grossflächigen Form, ausgeführt, wodurch technologisch einfach ein intuitives bedienbares Schaltmittel realisierbar ist.

Vorteilhaft ist der federnd druckvorgespannte Übernahmetaster mit dem stärker federnd vorgespannten Motorschalter des Handwerkzeuggerätes am Handgriff und einem Zeitgeber kombiniert, wodurch sich bei Betätigung des Übernahmetasters ein, durch den Nutzer spürbarer, Druckpunkt ausbildet, der, über eine Mindestzeitdauer betätigt, eine Übernahme in den Messwertspeicher bewirkt.

Vorteilhaft weist das Handwerkzeuggerät einfache akustische und/oder leuchtende Signalmittel wie Piepser oder Leuchtdioden auf, welche die Übernahme des Sollwertes und das Erreichen dieses durch den Messwert signalisieren.

Vorteilhaft ist dem Übernahmebetätigungsmittel ein händisch betätigbares Korrekturbetätigungsmittel zur inkrementellen Korrektur des übernommenen Messwertes in Richtung sowohl steigenden als auch fallenden Sollwertes zugeordnet, wodurch eine einfache intuitive Änderung dessen möglich ist.

Vorteilhaft ist auf dem Handwerkzeuggerät ein numerisches Display sichtbar angeordnet, welches zumindest zeitweise den Sollwert numerisch anzeigt.

Vorteilhaft weist das Handwerkzeuggerät eine Datenkommunikationsschnittstelle, bspw. einen Transpondersender/empfänger oder einen Laserscanner auf. Eine, der Datenkommunikationsschnittstelle am Handwerkzeuggerät von einem in Kommunikationsreichweite befindlichen Befestigungsmittel oder deren Verpackung oder einem speziellen Gerät wie einem Handy übermittelte, Setztiefe wird bei Betätigung des Betätigungsmittels derart berücksichtigt, dass dieser bei der Berechnung des Sollwertes vom Messwert mit auf der Referenzfläche aufgesetzter Werkzeugspitze subtrahiert wird.

Weiter vorteilhaft wird bei einer zusätzlich vom Werkzeug übermittelten Werkzeuglänge bei der Berechnung des Sollwertes die übermittelte Setztiefe von der übermittelten Werkzeuglänge subtrahiert.

Die Erfindung wird bezüglich eines vorteilhaften Ausführungsbeispiels näher erläutert mit einer Figur als Handwerkzeuggerät mit elektronischem Tiefenanschlag.

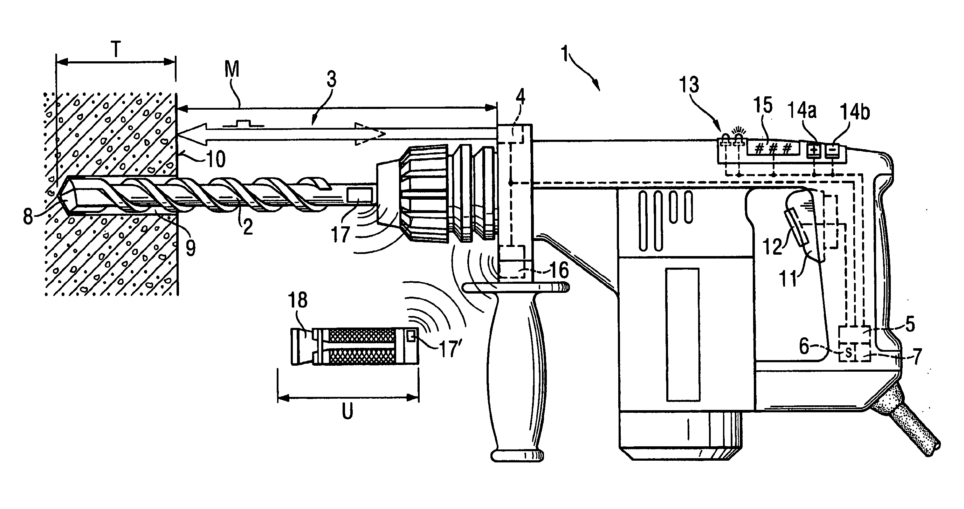

Nach der Figur weist ein als Bohrhammer ausgeführtes Handwerkzeuggerät 1 für ein zumindest teilweise drehend angetriebenes Bohrwerkzeug 2 einen elektronischen Tiefenanschlag 3 mit einem laufzeitsensitiven Lasermesssystem als Sensor 4 und einer als Mikroprozessor ausgeführten Recheneinheit 5 mit einem Sollwertspeicher 6 für einen Sollwert S und einem Zeitgeber 7 für die Übernahme in den Sollwertspeicher bei einer Betätigung am Druckpunkt in einer Dauer von ca. 1 s auf. Ein die momentane Tiefe T einer Bohrwerkzeugspitze 8 in einem Sackloch 9 mittelbar bestimmender Messwert M wird bezüglich des Abstands vom Sensor 4 zu einer Referenzfläche 10 ermittelt. Das Handwerkzeuggerät 1 weist am Handgriff einen druckbetätigten Motorschalter 11 mit einem händisch betätigbaren, grossflächigen Übernahmetaster 12 auf. Zwei verschiedenfarbige Leuchtdioden sind als Signalmittel 13 zur Signalisierung eines, einen Sollwert S erreichenden, Messwertes M sichtbar angeordnet. Auf der Oberseite des Handwerkzeuggerätes 1 sind zwei händisch betätigbare, grossflächige Korrekturbetätigungsmittel 14a, 14b als up- und down-Tasten sowie ein numerisches Display 15 sichtbar angeordnet. Eine als Transpondersender/empfänger ausgeführte Datenkommunikationsschnittstelle 16 am Handwerkzeuggerät 1 kommuniziert mit je einem Transponder 17, 17' im Bohrwerkzeug 2 und einem räumlich zugeordneten, als Anker ausgeführten, Befestigungsmittel 18 mit einer bestimmten, zugeordneten Setztiefe U.

## Patentansprüche

1. Handwerkzeuggerät für ein zumindest teilweise drehend angetriebenes Bohrwerkzeug (2) mit einem elektronischen Tiefenanschlag (3) mit einem Sensor (4) zur berührungslosen Entfernungsmessung und mit einer Recheneinheit (5) zur Berechnung der Tiefe (T) einer Bohrwerkzeugspitze (8) zu einer Referenzfläche (10) sowie zur Signalisierung eines, einen Sollwert (S) erreichenden, Messwerts (M), **dadurch gekennzeichnet, dass** der Sollwert (S) über ein einziges händisch betätigbares Übernahmebetätigungsmittel in einen Sollwertspeicher (6) übernehmbar ist.

2. Handwerkzeuggerät nach Anspruch 1, **dadurch gekennzeichnet, dass** das Übernahmebetätigungsmittel als federnd druckvorgespannter, optional grossflächiger, Übernahmetaster (12) ausgeführt ist.

3. Handwerkzeuggerät nach Anspruch 2, **dadurch gekennzeichnet, dass** der federnd druckvorgespannte Übernahmetaster (12) mit dem stärker federnd vorgespannten Motorschalter (11) des Handwerkzeuggerätes und einem Zeitgeber (7) kombiniert ist.

4. Handwerkzeuggerät nach einem der vorherigen Ansprüche, **dadurch gekennzeichnet, dass** das Handwerkzeuggerät einfache akustische und/oder leuchtende Signalmittel (13) aufweist.

5. Handwerkzeuggerät nach einem der vorherigen Ansprüche, **dadurch gekennzeichnet, dass** dem Übernahmebetätigungsmittel ein händisch betätigbares Korrekturbetätigungsmittel (14a, 14b) zur inkrementellen Korrektur des übernommenen Messwertes (M) in Richtung sowohl steigenden als auch fallenden Sollwertes (S) zugeordnet ist.

6. Handwerkzeuggerät nach einem der vorherigen Ansprüche, **dadurch gekennzeichnet, dass** auf dem Handwerkzeuggerät ein numerisches Display (15) sichtbar angeordnet ist.

7. Handwerkzeuggerät nach einem der vorherigen Ansprüche, **dadurch gekennzeichnet, dass** das Handwerkzeuggerät eine Datenkommunikationsschnittstelle (16) aufweist, welcher von einem in Kommunikationsreichweite befindlichen Befestigungsmittel (18) oder deren Verpackung oder einem speziellen Gerät eine Setztiefe (U) und optional vom Bohrwerkzeug (2) die Werkzeuglänge der Recheneinheit (5) übermittelt wird.

## Claims

1. Hand tool for an at least partly rotatingly driven drilling tool (2) comprising an electronic depth stop (3) with a sensor (4) for contactless distance measurement and having a computer unit (5) for calculating the depth (T) of a drilling tool tip (8) from a reference surface (10) and for signalling a measured value (M) as it reaches a target value (S), **characterised in that** the target value (S) can be transferred, by means of a single hand-actuated transfer actuating means, to a target value store (6).

2. Hand tool according to claim 1, **characterised in that** the transfer actuating means is carried out as a transfer button (12), which optionally has a large surface area, and is spring pre-loaded.

3. Hand tool according to claim 2, **characterised in that** the spring pre-loaded transfer button (12) is combined with the more strongly spring pre-loaded motor switch (11) of the hand tool and with a timing unit (7).

4. Hand tool according to one of the preceding claims, **characterised in that** the hand tool has simple acoustic and/or luminous signalling means (13).

5. Hand tool according to one of the preceding claims, **characterised in that** assigned to the transfer actuating means is a hand-actuated correction-actuating means (14a, 14b) for incremental correction of the transferred measured value (M) in the direction both of rising and of falling target values (S).

6. Hand tool according to one of the preceding claims, **characterised in that** a numerical display (15) is visibly arranged on the hand tool.

7. Hand tool according to one of the preceding claims, **characterised in that** the hand tool has a data communication interface (16) to which a placement depth (U) is transferred from a fixing means (18), or from its packaging or from a special device, situated within communication distance, and optionally the tool length is transferred from the drilling tool (2) to the computer unit (5).

## Revendications

1. Appareil portatif pour un foret au moins partiellement entraîné en rotation (2), comprenant une butée électronique de profondeur (3) avec un capteur (4) pour la mesure d'éloignement sans contact et avec un module de calcul (5) destiné à calculer la profondeur (T) d'une pointe de foret (8) par rapport à une surface de référence (10) ainsi qu'à signaler une valeur mesurée (M) atteignant la valeur de consigne (S), **caractérisé en ce que** la valeur de consigne (S) peut être prise en compte dans une mémoire de valeurs de consigne (6) par l'intermédiaire d'un moyen unique d'actionnement de prise en compte actionnable manuellement.

2. Appareil portatif selon la revendication 1, **caractérisé en ce que** le moyen d'actionnement de prise en compte est conformé en touche de prise en compte précontrainte élastiquement en pression, optionnellement à grande surface (21).

3. Appareil portatif selon la revendication 2, **caractérisé en ce que** la touche de prise en compte précontrainte élastiquement en pression (12) est combinée avec un commutateur de moteur à précontrainte élastique supérieure (11) de l'appareil portatif et avec un générateur d'horloge (7).

4. Appareil portatif selon une des revendications précédentes, **caractérisé en ce que** l'appareil portatif comporte des moyens simples de signalisation acoustique et/ou lumineuse (13).

5. Appareil portatif selon une des revendications précédentes, **caractérisé en ce qu'**au moyen d'actionnement de prise en compte est associé un moyen d'actionnement de correction actionnable manuellement (14a, 14b) pour la correction incrémentielle de la valeur mesurée prise en compte (M) en fonction aussi bien d'une augmentation que d'une diminution de la valeur de consigne (S).

6. Appareil portatif selon une des revendications précédentes, **caractérisé en ce qu'**un affichage numérique (15) est implanté de manière visible sur l'appareil portatif.

7. Appareil portatif selon une des revendications précédentes, **caractérisé en ce que** l'appareil portatif comporte une interface de transmission de données (16) à laquelle une profondeur de scellement (U) est communiquée par un moyen de fixation (18) placé à portée de transmission ou par son emballage ou par un appareil spécial, la longueur de foret étant optionnellement communiquée au module de calcul (5) par le foret (2).
